# FASCICULE DE BREVET EUROPEEN

(11) **EP 3 501 288 B1**
(45) Date de publication et mention de la délivrance du brevet: **11.10.2023**
(21) Numéro de dépôt: 18210568.4
(22) Date de dépôt: 05.12.2018
(51) Int. Cl.: A23B 4/00, A23B 4/023, A23B 4/06, B65B 25/06

(54) **PROCÉDÉ DE CONDITIONNEMENT DE POISSON CRU, EN VUE DE SON TRANSPORT ET DE SON CONDITIONNEMENT FINAL**
VERPACKUNGSVERFAHREN VON ROHEM FISCH FÜR DEN TRANSPORT UND SEINE ENDGÜLTIGE VERPACKUNG
METHOD FOR PACKAGING RAW FISH, FOR TRANSPORT AND ITS FINAL PACKAGING

(30) Priorité: 19.12.2017 FR 1762473
(43) Date de publication de la demande: 26.06.2019
(73) Titulaire: BOLTON FOOD, 92407 Courbevoie Cedex (FR)
(72) Inventeur: CAILLAUD, Lionel, 44410 HERBIGNAC (FR); LE GARS, Nicolas, 29170 Fouesnant (FR); ASSARA, Guillaume, 29300 TREMEVEN (FR); LELIEPAULT, Amandine, 29720 PLONEOUR LANVERN (FR)
(74) Mandataire: Jacobacci Coralis Harle

(56) Documents cités:
- EP-A1- 0 358 791
- EP-A1- 2 671 459
- EP-A1- 3 150 074
- DE-A1-102016 105 274
- US-A- 3 959 505
- US-A1- 2005 014 459

## Description

### DOMAINE TECHNIQUE AUQUEL SE RAPPORTE L'INVENTION

La présente invention concerne de manière générale le domaine du conditionnement de poisson.

Elle concerne plus particulièrement un procédé de conditionnement de poisson cru, en vue de son transport et de son conditionnement final, par exemple de son emboîtage.

### ARRIERE-PLAN TECHNOLOGIQUE

Les poissons sont en général pêchés en mer puis conservés dans la cuve du bateau de pêche jusqu'à ce que cette dernière soit pleine et/ou que les poissons soient débarqués sur terre. Selon la durée de la pêche, il arrive que les poissons soient congelés dans la cuve du bateau, en attendant leur débarquement.

Les zones de débarquement des poissons étant souvent éloignées des consommateurs, il faut encore pouvoir transporter les poissons jusqu'à leur point de vente. Afin de faciliter ce transport et de garantir la conservation des poissons, il est connu de les conditionner dans des enveloppes de conserve alimentaires, notamment de les emboîter dans des boîtes de conserve alimentaires. Cette technique permet en outre de palier aux irrégularités de pêche, et de garantir un stock relativement constant de poissons pour le consommateur.

Le conditionnement final, et notamment l'emboîtage des poissons peut être réalisé à proximité des zones de débarquement du poisson, dans des usines de conserverie. Il peut être réalisé sur poisson cru, selon un procédé de conditionnement final à cru, notamment d'emboîtage à cru, ou sur poisson cuit selon un procédé de conditionnement final après cuisson, notamment d'emboîtage après cuisson.

Le procédé de conditionnement final à cru peut être utilisé avec les poissons fraîchement débarqués de la pêche ou avec les poissons congelés, et, dans ce dernier cas, éventuellement à distance des zones de débarquement.

Lorsque le conditionnement final est réalisé à distance des zones de débarquement, il est connu de préparer des longes de poisson cuites, de les mettre en sachet sous vide et, éventuellement, de les congeler pour pouvoir les transporter jusqu'aux usines de conditionnement final, par exemple jusqu'aux usines de conserverie où elles seront conditionnées selon le procédé d'emboîtage après cuisson.

Le rendement matière global d'un procédé de conditionnement, en particulier d'un procédé d'emboîtage, est défini par le rapport entre la masse nette égouttée présente dans l'enveloppe de conserve, par exemple dans la boîte de conserve, à la fin du procédé, et la masse de poisson entier initiale à partir de laquelle est mis en oeuvre le procédé de conditionnement ou d'emboîtage. Par exemple, lorsque 100 boîtes de conserve de 140g, en masse nette égouttée, sont obtenues avec 35kg de thon entier, le rendement matière global est de 40%.

Il s'avère que le rendement matière global en poisson du procédé de conditionnement ou d'emboîtage après cuisson réalisé à partir des longes de poissons cuites est plus faible que celui du procédé de conditionnement ou d'emboîtage à cru réalisé directement à partir des poissons crus, ce qui est un inconvénient du procédé de conditionnement ou d'emboîtage à cuit.

On connait aussi des documents EP3150074, EP0358791, DE102016105274 et US2005014459 une méthode de conditionnement de poisson cru sous forme de sachets souples, boudins ou saucissons.

Il existe encore un besoin d'améliorer les procédés connus de conditionnement de poissons crus.

### OBJET DE L'INVENTION

Afin de remédier à l'inconvénient précité de l'état de la technique, la présente invention propose un nouveau procédé de conditionnement du poisson cru, autorisant un conditionnement final, notamment un emboîtage, à cru et à distance de la zone de débarquement.

Plus particulièrement, on propose selon l'invention un procédé de conditionnement de poisson cru comprenant les étapes suivantes selon la revendication 1.

Ainsi, il est possible de transporter facilement le poisson cru vers un site de conditionnement, notamment d'emboîtage, à distance du site de débarquement du poisson pêché et de bénéficier du rendement accru des procédés d'emboîtage de poisson cru à distance des sites de débarquement du poisson. En outre, la densité de poisson à l'intérieur de l'enveloppe temporaire favorise une bonne conservation du poisson cru et minimise le contact dudit poisson avec l'oxygène. La densité de poisson contenu dans l'enveloppe temporaire permet également d'estimer avec précision la quantité de poisson introduite dans l'enveloppe de conserve lors de l'étape e).

D'autres caractéristiques non limitatives et avantageuses du procédé conforme à l'invention sont données dans les sous-revendications 2 à 10.

### DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.

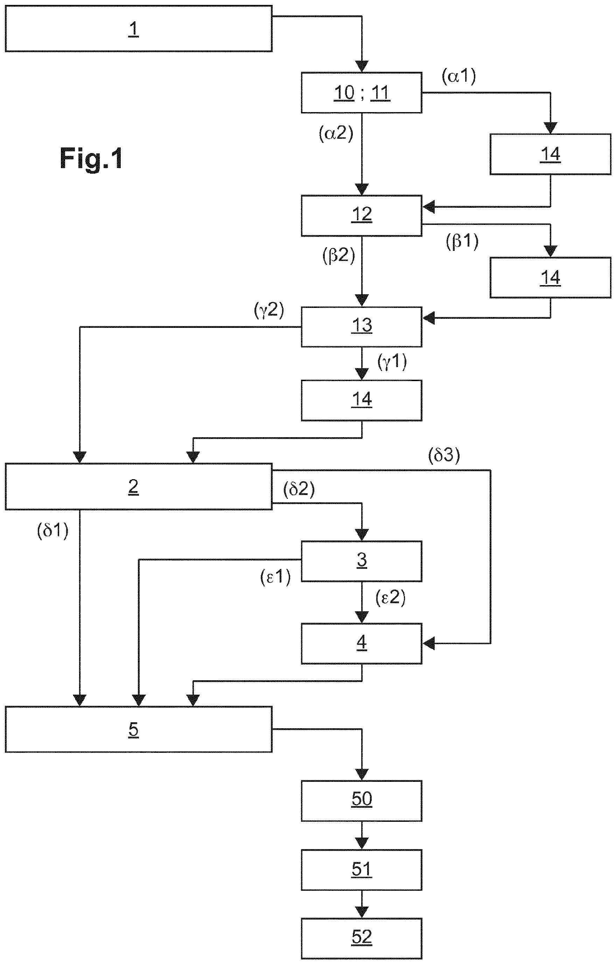

Sur les dessins annexés, la figure 1 unique est un schéma bloc illustrant les principales étapes du procédé de conditionnement de poisson cru selon l'invention.

Le procédé selon l'invention est mis en oeuvre préalablement au conditionnement final du poisson dans une enveloppe de conserve.

L'enveloppe de conserve adaptée à recevoir le poisson pour son conditionnement final est par exemple une enveloppe souple. En variante, il peut s'agir d'une enveloppe rigide telle qu'une boîte de conserve métallique ou un bocal de conserve en verre ou en plastique rigide.

Dans la suite de la description, à moins qu'il en soit indiqué autrement, on considérera que le conditionnement final comprend un emboîtage du poisson dans une boîte de conserve.

Ainsi, ici, on considérera que les étapes a) à d) du procédé selon l'invention sont mises en oeuvre préalablement à l'étape e) d'emboîtage du poisson dans la boîte de conserve.

Plus précisément, le procédé comprend les étapes suivantes :
a) préparation 1 du poisson cru incluant au moins une étape de nettoyage du poisson cru et une étape de mise en contact du poisson cru avec une composition auxiliaire comprenant de l'eau et du sel, ladite étape de mise en contact étant réalisée postérieurement à ladite étape de nettoyage; et,
b) introduction du poisson cru préparé obtenu à l'étape a) dans une enveloppe temporaire cylindrique de forme allongée, s'étendant selon un axe longitudinal, de manière à former 2 une barre de poisson cru préparé et enveloppé, à l'intérieur de laquelle la densité de poisson est comprise entre 0,9 kilogramme par litre et 1,15 kilogramme par litre: et,
e) conditionnement final du poisson dans une enveloppe de conserve;
ladite enveloppe temporaire étant distincte de l'enveloppe de conserve, c'est-à-dire ici de la boîte de conserve.

L'étape a) est mise en oeuvre sur des poissons frais, partiellement congelés ou intégralement congelés, mais toujours sur des poissons crus, c'est-à-dire n'ayant subi aucune cuisson ou pré-cuisson préalable à l'étape a). En pratique, les poissons crus ont été conservés à une température inférieure à 30°C.

Plus précisément, en général, préalablement à l'étape a), les poissons sont pêchés puis placés en saumure à -15°C afin d'y être congelés. Ils y demeurent jusqu'à ce que la cuve du bateau soit pleine. Une fois que celle-ci est pleine, les poissons sont placés en congélation, par exemple en congélation sèche entre -18°C et -25°C ou en congélation jusqu'à -60°C, en attendant leur débarquement. Les poissons passent ainsi entre 1 et 5 semaines, environ, dans les cuves du bateau de pêche, avant d'être débarqués. Il arrive que les poissons soient congelés pendant six mois, voire un an, avant la mise en oeuvre de l'étape a), mais, compte tenu du fait que les poissons congelés perdent jusqu'à 1% de leur masse par semaine et que leurs graisses s'altèrent, il est préférable de réduire leur temps de congélation à moins de six mois, ce qui évite d'avoir à enlever davantage de chair (les chairs altérées), lors de l'étape a) de préparation.

Une fois débarqués, les poissons sont décongelés préalablement à la mise en oeuvre de l'étape a) du procédé. La décongélation peut par exemple s'effectuer par l'immersion des poissons dans de l'eau.

Avantageusement, le procédé de conditionnement selon l'invention est mis en oeuvre directement dans les zones de débarquement sur le poisson fraîchement débarqué, ou à distance des zones de débarquement sur poissons congelés. Le poisson conditionné selon le procédé objet de l'invention pourra alors être facilement transporté jusqu'à des usines de conserverie où il subira son conditionnement final, c'est-à-dire où il sera mis en boîte.

### Etape a)

A l'étape a), les poissons sont préparés, par exemple, en usine.

De préférence, telle que représentée sur la figure 1, l'étape de préparation 1 du poisson comprend les étapes successives suivantes :
- une étape de nettoyage 10 qui comporte au moins un étêtage et une éviscération, suivie, optionnellement, d'un lavage **11** du poisson ;
- une étape de parage **12** du poisson qui fait généralement partie de l'étape de nettoyage **10** ; et, éventuellement,
- une étape de découpe **13** du poisson paré.

En particulier, l'étape de nettoyage **10** comprend un étêtage qui consiste à enlever la tête et les nageoires, et une éviscération qui consiste à séparer le poisson de ses viscères. Ces parties du poisson impropres à la consommation sont le plus souvent enlevées à la main à l'aide d'un couteau tranchant, la tête devant rester en général solidaire des viscères. Le processus peut se faire également mécaniquement pour certaines espèces de poisson, notamment pour les thons « *Eutynnus (Katsuwonus) pelamis »,* plus courrament appelés thons listao. La principale précaution est d'éviter l'étalement des viscères intestinaux qui sont porteurs de germes et pourraient contaminer la chair du poisson.

En général, l'étape de nettoyage **10** comprend aussi l'étape de lavage **11** qui consiste à rincer le poisson.

Une fois que les poissons sont étêtés, éviscérés, et éventuellement lavés **10, 11,** le poisson subit l'étape de parage **12.** Le parage **12** est éventuellement mécanisé, mais préférentiellement réalisé manuellement.

Pour les poissons de petites tailles, par exemple pour les thons listao, le parage consiste à la fois à lever les filets du poisson, c'est-à-dire à séparer la chair du poisson de ses arêtes, et à séparer ladite chair du poisson de ses parties généralement non consommées.

De manière générale, l'étape de parage **12** comprend des opérations visant à
- retirer la peau du poisson et les éventuelles graisses sous-cutanées qui risqueraient de rancir après l'emboîtage et de dégrader la qualité gustative de la chair des poissons,
- retirer les parties sanguines, notamment celles qui se trouvent proches de l'arête centrale ou celles qui vont brunir à la cuisson et donner un goût très amer, ou encore celle provenant des éventuels hématomes qui ont pu se former au sein de la chair au moment de la pêche, et,
- retirer les gonades.

En pratique, le parage est réalisé selon un compromis entre le coût du parage et la qualité gustative finale des poissons conditionnés : un parage excessif revient à retirer et jeter une plus grosse partie de la chair des poissons, ce qui assure une qualité gustative supérieure mais est nettement plus coûteux.

Avantageusement, grâce au procédé selon l'invention, le parage **12** est réalisé à cru et la perte des matières nobles du poisson lors de l'étape de préparation 1 du poisson est réduite. Cela permet, in fine, d'améliorer le rendement matière globale de l'emboîtage à cru mis en oeuvre postérieurement aux étapes a) et b) du procédé de conditionnement selon l'invention, par rapport à un procédé d'emboîtage après cuisson classique.

De préférence, au cours de l'étape de parage **12,** le sens de la chair est respecté au maximum de façon à obtenir une présentation en tranche.

Enfin, l'étape de préparation **1** du poisson peut également comporter l'étape de découpe **13** au cours de laquelle le poisson est coupé en morceaux et calibré de sorte à pouvoir entrer aisément dans l'enveloppe temporaire cylindrique lors de l'étape b) de formation **2** de la barre de poisson cru. En pratique, cette étape de découpe **13** revient à trancher les filets du poisson pour les faire rentrer dans l'enveloppe temporaire cylindrique.

De manière avantageuse, l'étape a) de préparation **1** du poisson cru comprend selon l'invention une étape de mise en contact **14** du poisson cru avec une composition auxiliaire comprenant de l'eau et du sel.

Cette étape de mise en contact **14** du poisson cru avec la composition auxiliaire est particulièrement avantageuse dans le cas des poissons crus d'ordinaire susceptibles de perdre leur flaveur au cours du temps ou d'acquérir un faux goût désagréable pour le consommateur, comme c'est le cas du thon listao.

L'étape additionnelle de mise en contact **14** du poisson cru avec une composition auxiliaire spécifique prévient la détérioration du poisson au cours du temps et empêche l'apparition d'un mauvais goût, en particulier un faux goût, lorsque le poisson est conditionné à cru, ce qui rendrait le poisson ensuite inséré dans l'enveloppe de conserve, c'est-à-dire mis en boîte, de mauvaise qualité voire non commercialisable.

Grâce à cette étape de mise en contact **14,** le conditionnement des poissons d'ordinaire peu utilisés pour les raisons susmentionnées est rendu possible. Ainsi, il est possible de conditionner des poissons dont la ressource naturelle est supérieure à celle d'autres espèces, ce qui favorise une meilleure gestion des ressources de poissons.

En outre, le procédé selon l'invention améliore les qualités gustatives des espèces conditionnées à cru, notamment celles du thon listao, ce qui permet d'offrir au consommateur un produit final satisfaisant.

L'étape de mise en contact **14** est réalisée postérieurement à ladite étape de nettoyage **10.** Telle qu'illustrée sur la figure 1, elle est mise en oeuvre (voies α1, β1, γ1) ou non (voies α2, β2, γ2) entre l'étape de nettoyage **10** et l'étape de formation **2** de la barre de poissons cru.

Bien entendu, l'étape de mise en contact **14** du poisson avec la composition auxiliaire peut être mise en oeuvre après au moins l'une des étapes **10** à **13** mentionnées précédemment, à savoir après l'étape de nettoyage **10** (voie α1), et/ou, le cas échéant, après l'étape de lavage **11,** et/ou après l'étape de parage **12** (voie β1), et/ou après l'étape de découpe **13** (voie γ1).

Il est aussi également envisageable que le poisson soit mis en contact **14** avec la composition auxiliaire après au moins deux des étapes **10** à **13,** voire après au moins trois des étapes **10** à **13** ou après chaque étape **10** à **13.**

En pratique, cette étape de mise en contact **14** est mise en oeuvre entre l'étape de nettoyage **10** et l'étape de parage **12,** et/ou, le cas échéant, entre l'étape de nettoyage **10** et l'étape de lavage **11,** et/ou, le cas échéant, entre l'étape de lavage **11** et l'étape de parage **12,** et/ou entre l'étape de parage **12** et l'étape de découpe **13,** et/ou après l'étape de découpe **13.**

On réalise de préférence au moins deux, au moins trois, voire au moins quatre, étapes additionnelles de mise en contact **14** du poisson cru avec la composition auxiliaire.

Préférentiellement, le poisson est mis en contact **14** avec la composition auxiliaire entre l'étape de nettoyage **10** (et de lavage **11** éventuel) et l'étape de parage **12,** ainsi qu'après l'étape de découpe **13,** de sorte que le procédé préféré emprunte le chemin α1-β2-γ1.

Cela étant, tous les chemins empruntant les combinaisons de voies α1, β1, γ1, α2, β2 et γ2 sont envisageables.

La mise en contact **14** du poisson cru avec la composition auxiliaire directement après l'étape de nettoyage **10,** et en particulier directement après le lavage **11** présente l'avantage de débarrasser au maximum les poissons de leur sang. La présence de sang risquerait sinon d'entraîner l'apparition d'un faux goût dans le poisson, tel qu'un faux goût métallique et/ou astringent, notamment dû à l'hémoglobine.

En pratique, la durée de chaque étape de mise en contact **14** du poisson cru avec la composition auxiliaire pourra être ajustée en fonction du moment, au sein du procédé, auquel elle est réalisée.

Notamment, la durée de chaque étape de mise en contact **14** du poisson cru avec ladite composition auxiliaire est par exemple comprise entre 5 minutes et 8 heures.

Préférentiellement, la durée de l'étape de mise en contact **14** est comprise entre 4 heures et 8 heures lorsqu'elle est mise en oeuvre entre l'étape de nettoyage **10** et l'étape de parage **12,** le cas échéant entre l'étape de lavage **11** et l'étape de parage **12,** et/ou entre l'étape de découpe **13** et l'étape de l'étape de formation **2** de la barre de poisson.

Préférentiellement, la durée de l'étape de mise en contact **14,** est comprise entre 1 heures et 4 heures lorsqu'elle est mise en oeuvre entre l'étape de parage **12** et l'étape de découpe **13.**

La composition auxiliaire utilisée dans l'étape de mise en contact **14** présente les caractéristiques énoncées ci-après.

Le sel utilisé est du sel de table (NaCl). La concentration en sel de la composition auxiliaire, en masse par rapport à la masse totale de ladite composition auxiliaire est comprise entre 1% et 10%, de préférence entre 1% et 5%, voire entre 1% et 4%.

Ainsi, la concentration en sel de la composition auxiliaire, en masse par rapport à la masse totale de ladite composition auxiliaire est par exemple égale à 1%, 2%, 3%, 4%, 5%, 6%, 7%, 8%, 9% ou encore 10%.

Avantageusement, la teneur en sel de la composition auxiliaire est ajustée pour optimiser la qualité gustative finale du poisson emboîté : une teneur trop basse en sel ne serait en effet pas suffisante pour éviter l'apparition de faux goût de manière satisfaisante, tandis qu'une teneur supérieure aurait l'effet inverse dû à la lyse de protéines.

La composition auxiliaire peut également comprendre un agent conservateur, un agent antioxydant, un arôme, un colorant, un épaississant, un exhausteur de goût ou tout autre additif connu de l'homme du métier dans le domaine de l'agroalimentaire et habituellement utilisés dans le domaine de la conserverie, ou un de leur mélange.

En particulier, l'arôme éventuellement compris dans la composition auxiliaire est par exemple un arôme naturel. Celui-ci peut être choisi parmi : un extrait de céleri, un extrait de livèche, un extrait de romarin (qui peut ainsi avoir la double fonction d'arôme et d'agent antioxydant), de l'oignon, ou un de leurs mélanges.

Avantageusement, l'emploi de l'arôme, mélangé aux poissons crus, par exemple au thon listao, permet de masquer un éventuel faux goût tel qu'une note métallique ou d'amertume.

Préférentiellement, l'étape de mise en contact **14** avec ladite composition auxiliaire est réalisée à une température appropriée, notamment comprise entre -10°C et +10°C, préférentiellement entre -8°C et +4°C, encore plus préférentiellement comprise entre -4°C et -2°C. Pour ce faire, la composition auxiliaire peut comprendre de la glace.

En pratique, la mise en contact **14** du poisson cru avec la composition auxiliaire peut être réalisée par trempage, par barattage, par malaxage, par injection ou une combinaison de ces techniques.

La mise en contact par trempage signifie que le poisson est mis à tremper dans un bain contenant la composition auxiliaire. En général, lorsque la mise en contact est réalisée par trempage, la durée de l'étape de mise en contact est comprise entre 5 minutes et 8 heures.

La mise en contact par barattage signifie que le poisson est mis au contact avec la composition auxiliaire dans une cuve cylindrique fermée contenant ladite composition auxiliaire. Le mélange formé par la composition auxiliaire et le poisson est appelé mêlée. En pratique, le poisson représente entre 50% et 95%, par exemple 85%, en masse par rapport à la masse totale de la mêlée, et la composition auxiliaire entre 5% et 50%, par exemple 15% en masse par rapport à la masse totale de la mêlée.

La cuve peut en outre être placée sous vide, c'est-à-dire à une pression inférieure à la pression atmosphérique, par exemple sous une pression abaissée de 0,2 à 0,9 bar par rapport à la pression atmosphérique. Avantageusement, la mise sous vide permet de préserver le poisson de l'oxygénation par l'oxygène de l'air. La cuve cylindrique est entraînée en rotation autour d'un axe globalement horizontal, de manière à améliorer la mise en contact du poisson cru avec la composition auxiliaire.

Il est aussi possible d'alterner les moments pendant lesquels la cuve de barattage est placée sous vide, et ceux pendant lesquels elle est sous pression ambiante.

En pratique, la mêlée est en outre soumise à un brassage mécanique au moyen de pales de petites dimensions. Les pales peuvent tourner à une vitesse comprise entre 1,5 et 5 tours par minutes, par exemple de 2 tours par minute.

Avantageusement, les pales de petites dimensions sont telles qu'elles n'altèrent pas la chair du poisson, notamment lorsque la mise en contact du poisson avec la composition auxiliaire est réalisée après l'étape de découpe 13. La durée de l'étape de mise en contact par barattage est par exemple comprise entre 30 minutes et 120 minutes.

La mise en contact par malaxage signifie que le poisson est mis à tremper dans une cuve fermée comprenant la composition auxiliaire, la cuve comportant une vis d'axe globalement horizontal. Cette vis est adaptée à tourner dans la cuve autour de cet axe. La durée de l'étape de la mise en contact par malaxage est comprise entre 15 minutes et 60 minutes.

Avantageusement, la vis de la cuve comporte, autour de son axe, des pales de moyennes ou grandes dimensions, adaptées à déstructurer la chair du poisson.

La cuve de malaxage peut aussi être placée sous vide, comme la cuve de barattage, de manière à préserver le poisson de l'oxydation par l'air ambiant.

La mise en contact par injection signifie que la composition auxiliaire est injectée sous pression dans le poisson par un système d'injection. En pratique, la composition auxiliaire circule en boucle fermée dans le système d'injection et est régulièrement renouvelée, par exemple après un temps donné de circulation qui peut être de l'ordre de 20 minutes. Le système d'injection comprend par exemple 16 têtes de 4 aiguilles adaptées à pénétrer dans la chair du poisson. Les poissons peuvent être disposés sur un convoyeur avançant par à coups. Généralement, la durée de l'étape de mise en contact par injection est comprise entre 1 seconde et 5 minutes par pièce à injecter. En pratique, le temps d'injection varie selon que les pièces à injecter sont des poissons entiers ou des morceaux de poisson.

Il est bien entendu aussi tout à fait envisageable que le poisson ne soit pas mis en contact avec la composition auxiliaire, auquel cas le procédé emprunte le chemin α2-β2-γ2. Cette variante n'est pas comprise dans le cadre de la présente invention.

Lorsque la mise en contact du poisson cru avec la composition auxiliaire est réalisée à une température comprise entre -10°C et +10°C, en particulier entre -8°C et +4°C, préférentiellement entre -4°C et -2°C, l'ajout de glace à la composition auxiliaire est particulièrement bien adapté à une mise en contact réalisée par trempage, malaxage ou brassage.

Par ailleurs, après l'étape de découpe **13,** et préalablement à la formation **2** de la barre de poisson cru, il est envisageable de mettre en oeuvre une étape de refroidissement/réfrigération (non représentée), notamment si l'introduction du poisson dans l'enveloppe temporaire cylindrique ne s'effectue pas tout de suite après la découpe **13** du poisson.

Cette étape de mise en contact **14** du poisson cru avec la composition auxiliaire entre l'étape de refroidissement/réfrigération peut être mise en oeuvre sur la voie γ2, avant l'étape de formation **2** de la barre de poisson, ou sur la voie γ1 avant et/ou après l'étape de mise en contact **14** du poisson cru avec la composition auxiliaire.

L'étape de refroidissement/réfrigération permet d'amener le poisson à une température comprise entre -10°C et +10°C.

### Etape b)

A l'étape b), le poisson cru préparé obtenu à l'étape a) est introduit dans l'enveloppe temporaire cylindrique de manière à former **2** la barre de poisson cru préparé et enveloppé.

Le poisson cru ainsi conditionné pourra alors facilement être transporté vers des usines de conditionnement final, c'est-à-dire des usines de conserverie dans l'exemple décrit, où il subira son conditionnement final, c'est-à-dire, ici, où il sera mis en boîte.

Le poisson n'est pas destiné à être vendu au consommateur en étant conditionné dans l'enveloppe temporaire cylindrique. Le poisson cru demeure temporairement dans l'enveloppe cylindrique, notamment pour faciliter son transport, avant d'être conditionné dans l'enveloppe de conserve finale, c'est-à-dire avant d'être mis en boîte de conserve dans l'usine de conserverie. Le poisson cru conditionné dans l'enveloppe temporaire cylindrique n'est pas destiné à rester dans ladite enveloppe temporaire cylindrique pendant plus de 1 jour à température ambiante, contrairement au poisson cru conditionné dans son enveloppe de conserve, ici dans sa boîte de conserve.

Ladite enveloppe temporaire est donc distincte de l'enveloppe de conserve, notamment de la boîte de conserve dans laquelle le poisson sera in fine emboîté. Cette enveloppe temporaire cylindrique, de forme allongée, s'étend selon l'axe longitudinal sur une longueur comprise entre 50 centimètres (cm) et 5 mètres (m).

Par exemple, l'enveloppe temporaire cylindrique s'étend sur 50cm, 60cm, 70cm, 80cm, 90cm, 1m, 1,5m, 2m, 2,5m, 3m, 3,5m, 4m, 4,5m ou encore 5m.

La section, dans un plan perpendiculaire audit axe longitudinal, de l'enveloppe temporaire cylindrique est globalement circulaire et présente un diamètre compris entre 40 millimètres et 200 millimètres (mm).

Par exemple, le diamètre de l'enveloppe temporaire cylindrique est égal à 40mm, 50mm, 60mm, 70mm, 80mm, 90mm, 100mm, 150mm ou encore 200mm.

Plus précisément, le diamètre de l'enveloppe temporaire cylindrique est choisi égal, à un jeu près, ou strictement inférieur, au diamètre de l'enveloppe de conserve, ici de la boîte de conserve, dans laquelle le poisson cru sera in fine inséré (ou mis en boîte).

L'enveloppe temporaire cylindrique utilisée à l'étape b) est réalisée en matériau au moins partiellement étanche au gaz. De préférence, ce matériau est un matériau souple tel qu'un matériau plastique souple, de l'aluminium ou de la cellulose.

En pratique, il convient d'utiliser un matériau étanche au dioxygène de l'air, qui est un gaz ayant tendance à altérer le poisson puisqu'il participe notamment à l'oxydation du poisson.

Ainsi, l'enveloppe temporaire cylindrique permet d'éviter l'oxydation du poisson cru qu'elle contient.

Lorsque l'enveloppe temporaire cylindrique est réalisée en aluminium, ce dernier devra être choisi suffisamment épais pour être étanche au gaz. En pratique, plus l'aluminium est épais, plus il est étanche au gaz.

Le matériau plastique souple pourra par exemple être un matériau multicouche, dont au moins une couche est étanche au gaz et au moins une autre couche fait barrière à l'eau.

Le matériau constitutif de l'enveloppe temporaire est préférentiellement adapté à la congélation ainsi qu'à la pré-cuisson, deux opérations que peut subir l'enveloppe temporaire cylindrique (voir ci-après).

Un dispositif connu de l'homme du métier est utilisé pour introduire le poisson dans l'enveloppe temporaire cylindrique. Ce dispositif est tout à fait similaire à celui typiquement utilisé pour réaliser des saucisses de viande ou de poisson.

A l'étape b), la densité de poisson à l'intérieur de la barre est comprise entre 0,9 kilogramme par litre et 1,15 kilogramme par litre. Une telle densité de poisson à l'intérieur de la barre permet de garantir une bonne conservation du poisson et minimise les contacts du poisson avec l'oxygène.

Pour contrôler la densité de poisson à l'intérieur de la barre de poisson, le dispositif utilisé synchronise la quantité de poisson poussée à l'intérieur de l'enveloppe temporaire cylindrique et l'avancement de ladite enveloppe temporaire cylindrique.

### Etape c)

Après la mise en oeuvre de l'étape b), une fois le poisson cru introduit dans l'enveloppe temporaire cylindrique, il est envisageable de mettre en oeuvre une étape supplémentaire c) de cuisson **3,** au moins partielle, de la barre de poisson.

On considère qu'une protéine est cuite lorsqu'elle a atteint ou dépassé la température de 65°C environ. Ici, on considérera qu'une cuisson totale est atteinte lorsque l'ensemble des protéines contenues dans la barre de poisson cru a atteint au moins 65°C. Au contraire, la cuisson est partielle lorsqu'une fraction des protéines contenues dans la barre de poisson cru a atteint 65°C.

L'étape de cuisson **3,** partielle ou totale, de la barre de poisson cru consiste à introduire cette barre de poisson dans un milieu à 95°C environ, par exemple dans une enceinte de four, à convection sèche ou à vapeur, ou dans de l'eau chaude à 95°C environ.

La durée de cette étape de cuisson **3** est comprise entre 30 secondes et 15 minutes dans le cas d'une cuisson partielle, et entre 30 secondes et 1 heure dans le cas d'une cuisson totale, selon le diamètre de l'enveloppe temporaire cylindrique utilisé et le mode de cuisson envisagé. Plus l'enveloppe temporaire cylindrique présente un grand diamètre, plus la durée de l'étape de cuisson **3,** partielle ou totale, sera longue.

Dans la barre de poisson partiellement cuite, seuls les morceaux de poisson situés à la périphérie de la barre, proches de l'enveloppe temporaire cylindrique, sont cuits, le coeur de la barre de poisson comportant toujours du poisson cru. Notamment, seules 30 % des protéines ont atteint la température de 65°C.

Avantageusement, la cuisson **3,** même partielle, de la barre de poisson détruit les microorganismes responsables de la dégradation du poisson. La cuisson, même partielle, améliore donc la bactériologie du poisson conditionné, de sorte que celui se conservera mieux, le temps du transport et de son conditionnement final, ici le temps de sa mise en boîte.

Telle que représentée que la figure 1, l'étape de cuisson **3** est mise en oeuvre entre l'étape de formation **2** de la barre de poisson et l'étape de conditionnement final, c'est-à-dire ici de mise en boîte du poisson **5.**

Comme le montre bien la figure 1, cette étape de cuisson **3** au moins partielle est optionnelle de sorte qu'il est envisageable de mettre en oeuvre le procédé en suivant les voies δ1 ou δ3 (sans l'étape de cuisson) ou suivant la voie δ2 (avec l'étape de cuisson **3).**

### Etape d)

Après l'étape de formation **2** de la barre de poisson cru, il est également envisageable de mettre en oeuvre une étape supplémentaire d) de congélation **4** au moins partielle de la barre de poisson.

On considère qu'une protéine est congelée lorsqu'elle a atteint ou est descendue sous la température de -5°C environ. Ici, on considérera qu'une congélation totale est atteinte lorsque l'ensemble des protéines contenues dans la barre de poisson est à -5°C ou moins. Au contraire, la congélation est partielle lorsqu'une fraction des protéines contenues dans la barre de poisson cru est à -5°C, le reste des protéines étant à une température supérieure à -5°C.

L'étape de congélation **4** totale consiste à amener la barre de poisson à une température comprise entre -3°C et -60°C, préférentiellement proche de -18°C.

Pour ce faire la barre de poisson est introduite et maintenue pendant tout le temps de la congélation, dans une enceinte à -25°C.

Dans la barre de poisson partiellement congelée, les protéines sont congelées et atteignent -5°C en périphérie tandis que les protéines du coeur de la barre restent à une température positive, par exemple autour de 4°C.

L'étape de congélation **4** partielle peut être réalisée en amenant la barre de poisson dans une enceinte à -5°C.

Avantageusement, grâce à l'étape de congélation **4** partielle ou totale, le poisson, conditionné dans l'enveloppe temporaire cylindrique et congelé, peut être conservé plus longtemps avant d'être mis en boîte. En particulier, lorsque la congélation est totale le poisson peut être conservé pendant 18 mois, et transporté dans un autre site pour finaliser son conditionnement (ici sa mise en boîte). Lorsque la congélation est partielle, la barre de poisson peut être stockée temporairement pour une mise en boîte ultérieure sur le même site de conditionnement.

Avantageusement, au cours de l'étape de congélation **4,** il est possible de maintenir la barre de poisson dans un moule présentant une forme spécifique, autre que cylindrique. Ainsi, grâce au caractère souple de l'enveloppe temporaire cylindrique, il est possible d'adapter la forme de la section transversale de la barre de poisson de sorte qu'elle corresponde à la forme de la section de l'enveloppe de conserve finale, ici de la boîte de conserve. Le poisson conditionné dans l'enveloppe temporaire cylindrique, puis congelé dans un moule spécifique de forme prédéterminée peut être conditionné plus facilement dans une enveloppe de conserve présentant une section de forme différente à celle d'un disque.

La barre de poisson peut être laissée dans le moule de forme spécifique lors de la congélation, de sorte que, par gravité, la barre de poisson adoptera la forme souhaitée. Il est aussi envisageable de contraindre la barre de poisson, par exemple en exerçant une pression, lors de la congélation pour la forcer à adopter la forme voulue.

Dans la suite, on appellera « diamètre » la plus grande dimension hors tout de la section de la barre de poisson.

L'étape de congélation **4** partielle ou totale peut être mise en oeuvre directement après l'étape de formation **2** de la barre de poisson (voie δ3), ou après l'éventuelle étape de cuisson **3** partielle ou totale (voie ε2).

Comme le montre bien la figure 1, cette étape de congélation **4** est optionnelle de sorte qu'il est envisageable de mettre en oeuvre le procédé selon l'invention en suivant les voies δ1 ou ε1 (sans l'étape de congélation), ou suivant la voie δ3 ou le chemin δ2- ε2 (avec l'étape de congélation **4).**

Les deux étapes de cuisson **3** et de congélation **4,** partielles ou totales, sont préférentiellement toutes les deux mises en oeuvre successivement après la formation **2** de la barre de poisson, de sorte que le procédé préféré selon l'invention emprunte le chemin δ2 - ε2.

Toutefois, il est aussi envisageable de ne mettre en oeuvre ni l'étape de cuisson **3,** ni l'étape de congélation **4,** de sorte que le procédé peut emprunter la voie δ1.

### Etape e)

Il est en outre réalisé une étape supplémentaire e) de conditionnement final, ici de mise en boîte **5,** du poisson dans une boîte de conserve.

Cette étape de mise en boîte **5** comporte les étapes suivantes :
- tranchage **50** de la barre selon une direction transversale à son axe longitudinal, de manière à obtenir une tranche de poisson, de préférence un disque de poisson ;
- insertion, ici emboîtage **51,** de ladite tranche ou disque de poisson dans ladite enveloppe de conserve ou boîte de conserve ;
- fermeture **52** de l'enveloppe de conserve ou boîte de conserve et stérilisation du poisson ainsi conditionné ou emboîté.

De préférence, l'insertion dans l'enveloppe de conserve, ici l"emboîtage **51,** est réalisé à une température environnante de -3°C.

Selon une première possibilité, représentée sur la figure 1, les étapes de tranchage **50** et d'emboîtage **51** sont réalisées dans cet ordre, successivement. Pour ce faire, la barre de poisson cru est d'abord tranchée de manière à réaliser une tranche de poisson, par exemple un disque de poisson ou une tranche présentant une section de forme prédéterminée, dont la hauteur est légèrement inférieure à celle de la boîte de conserve dans laquelle il est emboîté. Lors de l'étape d'emboîtage **51,** la tranche de poisson est introduite dans la boîte de conserve. La portion d'enveloppe temporaire cylindrique entourant la tranche de poisson est retirée une fois la tranche introduite dans la boîte de conserve, ou préalablement à l'introduction de la tranche dans la boîte.

Avantageusement, retirer l'enveloppe temporaire cylindrique après avoir emboîté la tranche de poisson dans la boîte de conserve permet de garantir le maintien de la tranche en forme pendant son introduction dans la boîte de conserve. La présence de l'enveloppe temporaire cylindrique facilite donc l'introduction de la tranche de poisson dans la boîte de conserve.

Selon une variante non représentée mais préférée, il est envisageable de réaliser d'abord l'étape d'emboîtage **51** puis l'étape de tranchage **50.** Pour ce faire, une extrémité ouverte de la barre de poisson est introduite dans la boîte de conserve, puis la barre de poisson est coupée à ras de la boîte de conserve. La portion d'enveloppe temporaire cylindrique entourant le tronçon de barre de poisson tranchée introduit dans la boîte de conserve peut être retirée, simultanément ou postérieurement au tranchage **50** de la barre de poisson.

Quelle que soit la variante envisagée, une étape de décongélation partielle de la barre de poisson peut être envisagée préalablement à son tranchage **50.** Cette décongélation partielle facilite le tranchage **50,** notamment dans le cas où la barre de poisson a été intégralement congelée.

Quelle que soit la variante envisagée, de préférence, le diamètre de la boîte de conserve est légèrement supérieur au diamètre de la tranche de poisson obtenu de sorte qu'un espace suffisant est laissé libre autour du poisson introduit dans la boîte de conserve.

Il est notamment possible de faire varier le diamètre de la barre de poisson préalablement à la mise en boîte, de manière à adapter au cas par cas, en particulier à réduire, le diamètre du disque de poisson à insérer dans la boîte de conserve. Il est aussi possible de forcer la barre à adopter une forme voulue, de manière à adapter au cas par cas, en particulier à augmenter, le diamètre du disque de poisson à insérer dans la boîte de conserve.

L'espace libre laissé dans la boîte de conserve permet par exemple l'ajout, dans la boîte de conserve, d'un liquide additionnel, ou d'un gaz inerte. En variante, il est possible de ne rien ajouter dans la boîte de conserve.

Lorsque l'espace accueille un liquide additionnel, ce liquide additionnel peut-être un liquide dit « de couverture ». Le liquide de couverture peut remplir entièrement ou partiellement l'espace libre. Le poisson dans la boîte de conserve est alors recouvert, au moins partiellement, par ce liquide de couverture.

Dans le cas où la boîte de conserve comprend du liquide de couverture, à l'ouverture de la boîte de conserve, le poisson, notamment le thon, doit représenter au minimum 70% de la masse nette totale, c'est-à-dire de la masse totale contenue dans la boîte, liquide de couverture compris.

De manière avantageuse, l'utilisation d'une tranche de poisson sous forme de disque pour remplir la boîte de conserve permet de doser facilement le poisson introduit dans la boîte de conserve. En effet, en connaissant la densité de poisson dans l'enveloppe cylindrique, ainsi que le diamètre et la hauteur du disque de poisson, il est possible de connaître la masse de poisson contenue dans le disque et donc de connaître la masse de poisson introduite dans la boîte de conserve.

Après les étapes d'emboîtage **51** et de tranchage **50,** quel que soit l'ordre dans lequel ces étapes sont mises en oeuvre, il est possible de mettre en oeuvre une étape de préchauffage (étape non représentée) de l'ensemble. L'étape de préchauffage ne correspond pas à une étape de cuisson, plutôt à une étape de cuisson partielle, similaire à celle mentionnée précédemment pour la barre de poisson cru. Il s'agit en effet, ici, de précuire la périphérie du poisson cru afin de limiter l'exsudât naturel de protéines pendant le temps s'écoulant entre l'étape d'emboîtage **51** et une étape de stérilisation ultérieure de la boîte de conserve sertie.

Un tel préchauffage est par exemple réalisé avec de l'eau chaude, à une température de 80-100°C, de préférence 85-95°C, pendant moins de 5 min, typiquement de l'ordre de 10 secondes à 1 minute. Plus précisément, de l'eau chaude, par exemple à 90°C, est versée dans la boîte de conserve dans lequel le poisson a été introduit et laissée au contact du poisson pendant quelques minutes. La boîte de conserve peut ensuite être vidée de cette eau chaude, par exemple en la renversant sur une grille, de telle sorte que le poisson reste à l'intérieur.

Avantageusement, l'étape de préchauffage permet de limiter la formation, à l'intérieur de la boîte de conserve, d'amas blanc issus de la coagulation de l'albumine, considérés comment des défauts visuels du poisson visibles à l'ouverture de la boîte de conserve.

L'ajout du liquide de couverture, lorsqu'il a lieu, est alors mis en oeuvre après cet éventuel préchauffage.

Le tableau 1 suivant donne une composition possible de liquide de couverture.

**Tableau 1**

| **TENEUR (%)** | | | |
|---|---|---|---|
| **SEL** | | **AGENT ANTIOXYDANT** | |
| **GAMME GLOBALE** | **TENEUR PREFERENTIELLE** | **GAMME GLOBALE** | **TENEUR PREFERENTIELLE** |
| 1 à 10 | 2 | 0,01 à 5 | 2 |

Ainsi, le liquide de couverture comprend en général de l'eau et du sel à une teneur comprise entre 1% et 10%, en masse par rapport à la masse totale du liquide de couverture. De préférence, la teneur en sel du liquide de couverture est comprise entre 1% et 2%, par exemple égale à 2%, en masse par rapport à la masse totale du liquide de couverture.

La teneur en sel du liquide de couverture est ajustée en fonction du sel contenu dans le poisson après sa mise en contact avec la composition auxiliaire.

Ici, Le sel ajouté est du sel de table, aussi appelé chlorure de sodium (NaCl).

Le liquide de couverture peut en outre comprendre un arôme, par exemple un arôme naturel tel qu'un extrait de céleri ou un extrait de livèche.

Le liquide de couverture a pour but d'éviter le dessèchement du poisson, notamment lorsque celui-ci est « au naturel ».

Selon une première variante de l'étape de mise en boîte 5, le liquide additionnel ajouté dans la boîte de conserve est de l'huile, éventuellement aromatisée.

Selon une deuxième variante de l'étape de mise en boîte **5,** le liquide additionnel ajouté dans la boîte de conserve est un liquide d'assaisonnement seulement.

Le volume de liquide d'assaisonnement introduit dans la boîte de conserve est généralement inférieur au volume de l'espace libre laissé dans la boîte de conserve.

Dans ce cas, le poisson introduit dans la boîte de conserve n'est pas entièrement recouvert de liquide d'assaisonnement. Avantageusement, à l'ouverture de la boîte de conserve, il ne sera alors pas nécessaire d'égoutter le poisson avant de le consommer. Le liquide d'assaisonnement permet simplement d'aromatiser et/ou d'assaisonner le poisson.

Dans le cadre de l'invention, une boîte de conserve a été utilisée. Cependant, d'autres contenants peuvent être utilisés en remplacement. Les dimensions et dénominations de ces contenants peuvent varier d'un pays à un autre, mais il s'agit généralement d'une boîte métallique, en fer blanc, en aluminium ou en matière plastique.

Le fer blanc est constitué par une mince feuille d'acier, revêtue sur ses deux faces d'une couche d'étain.

Après les étapes de tranchage **50** et d'emboîtage **51** de l'étape de mise en boîte 5, on procède à l'étape de fermeture **52.** Dans le cas de l'emboîtage, la boîte de conserve est fermée par un opercule. De préférence, la fermeture consiste en un sertissage de l'opercule sur la boîte de conserve. La boîte fermée, par exemple par sertissage, est ensuite stérilisée (étape non représentée) avant d'être mise en vente.

En variante, la fermeture **52** peut être réalisée en encapsulant ou en scellant l'opercule sur ladite boîte de conserve. La fermeture par encapsulage ou scellage est notamment utilisée dans les cas où d'autres enveloppes de conserve que les boîtes de conserve sont utilisées pour le conditionnement final.

L'étape de stérilisation permet notamment d'éliminer les microorganismes qui pourraient être présents dans les filets de poissons tranchés, et ce, de manière durable.

A titre d'exemple, la stérilisation s'effectue à une température allant de 110°C à 120°C pendant une durée comprise entre 45 min et 1h30, de préférence pendant environ 1 heure.

## Revendications

1. Procédé de conditionnement de poisson cru comprenant les étapes suivantes :
a) préparation du poisson cru incluant au moins une étape de nettoyage dudit poisson cru et une étape de mise en contact du poisson cru avec une composition auxiliaire comprenant de l'eau et du sel, ladite étape de mise en contact étant réalisée postérieurement à ladite étape de nettoyage. ; et,
b) introduction du poisson cru préparé obtenu à l'étape a) dans une enveloppe temporaire cylindrique de forme allongée, s'étendant selon un axe longitudinal, de manière à former une barre de poisson cru préparé et enveloppé, à l'intérieur de laquelle la densité de poisson est comprise entre 0,9 kilogramme par litre et 1,15 kilogramme par litre ; et,
e) conditionnement final du poisson dans une enveloppe de conserve ;
ladite enveloppe temporaire étant distincte de l'enveloppe de conserve.

2. Procédé de conditionnement selon la revendication 1, selon lequel il est en outre réalisé une étape supplémentaire c) de cuisson au moins partielle de la barre de poisson obtenue à l'étape b).

3. Procédé de conditionnement selon l'une des revendications 1 et 2, selon lequel il est en outre réalisé une étape supplémentaire d) de congélation au moins partielle de la barre de poisson obtenue à l'étape b).

4. Procédé de conditionnement selon l'une des revendications 1 à 3, selon lequel, à l'étape a), l'étape de nettoyage inclut un étêtage, une éviscération, éventuellement un lavage du poisson étêté et éviscéré, et un parage du poisson cru.

5. Procédé de conditionnement selon l'une des revendications 1 à 4, selon lequel, l'étape a) de préparation du poisson cru inclut une étape de découpe du poisson cru.

6. Procédé de conditionnement selon l'une des revendications 1 à 5, selon lequel l'enveloppe temporaire utilisée à l'étape b) s'étend selon ledit axe longitudinal sur une longueur comprise entre 50 centimètres et 5 mètres.

7. Procédé de conditionnement selon l'une des revendications 1 à 6, selon lequel l'enveloppe temporaire utilisée à l'étape b) présente une section, dans un plan perpendiculaire audit axe longitudinal, dont le diamètre est compris entre 40 millimètres et 200 millimètres.

8. Procédé de conditionnement selon la revendication 7, selon lequel ledit diamètre de l'enveloppe temporaire est inférieur au diamètre de l'enveloppe de conserve adaptée à recevoir le poisson pour son conditionnement final.

9. Procédé de conditionnement selon l'une des revendications 1 à 8, selon lequel l'enveloppe temporaire utilisée à l'étape b) est réalisée en matériau au moins partiellement étanche au gaz tel qu'un matériau plastique souple, de l'aluminium ou de la cellulose.

10. Procédé de conditionnement selon l'une des revendications 3 à 9, selon lequel il est en outre réalisé les étapes supplémentaires suivantes :
- décongélation partielle de la barre de poisson ;
- tranchage de la barre selon une direction transversale à son axe longitudinal, de manière à obtenir une tranche de poisson, de préférence un disque de poisson ;
- insertion, de préférence à -3°C, de ladite tranche de poisson dans ladite enveloppe de conserve ;
- fermeture de l'enveloppe de conserve et stérilisation du poisson ainsi conditionné.

11. Procédé de conditionnement selon l'une des revendications 1 à 10, selon lequel l'enveloppe de conserve adaptée à recevoir le poisson pour son conditionnement final est une enveloppe souple ou une enveloppe rigide de type boîte de conserve métallique ou bocal de conserve en verre ou plastique rigide.

## Patentansprüche

1. Verfahren zum Verpacken von rohem Fisch mit den folgenden Schritten:
a) Vorbereiten des rohen Fischs mit mindestens einem Schritt des Reinigens des rohen Fischs und einem Schritt des Inkontaktbringens des Fischs mit einer Wasser und Salz enthaltenden Hilfsmischung, wobei der Schritt des Inkontaktbringens nach dem Reinigungsschritt ausgeführt wird; und
b) Einführen des in Schritt a) erhaltenen vorbereiteten rohen Fischs in eine vorübergehende zylindrische, sich entlang einer Längsachse erstreckenden Hülle länglicher Form, um eine rohe, vorbereitete und umhüllte Stange Fisch zu bilden, innerhalb derer die Fisclidichte zwischen 0,9 Kilogramm pro Liter und 1,15 Kilogramm pro Liter beträgt; und
e) endgültiges Verpacken des Fischs in einer Aufbewahrungshülle;
wobei die vorübergehende Hülle nicht dieselbe wie die Aufbewahrungshülle ist.

2. Verpackungsverfahren gemäß Anspruch 1, demgemäß außerdem ein zusätzlicher Schritt c) des mindestens teilweisen Kochens der in Schritt b) erhaltenen Stange Fisch durchgeführt wird.

3. Verpackungsverfahren gemäß einem der Ansprüche 1 und 2, demgemäß außerdem ein zusätzlicher Schritt d) des mindestens teilweisen Einfrierens der im Schritt b) erhaltenen Stange Fisch durchgeführt wird,

4. Verpackungsverfahren gemäß einem der Ansprüche 1 bis 3, demgemäß beim Schritt a) der Schritt des Reinigens ein Entfernen des Kopfs, ein Entfernen der Eingeweide, eventuell ein Waschen des vom Kopf und von den Eingeweiden befreiten Fischs, und ein Zerlegen des rohen Fischs einschließt.

5. Verpackungsverfahren gemäß einem der Ansprüche 1 bis 4, demgemäß der Schritt a) des Vorbereitens des rohen Fischs einen Schritt des Zerschneidens des rohen Fischs einschließt.

6. Verpackungsverfahren gemäß einem der Ansprüche 1 bis 5, demgemäß sich die beim Schritt b) benutzte vorübergehende Hülle entlang der Längsachse über eine Länge zwischen 50 Zentimeter und 5 Meter erstreckt.

7. Verpackungsverfahren gemäß einem der Ansprüche 1 bis 6, demgemäß die beim Schritt b) benutzte vorübergehende Hülle einen in einer zur Längsachse senkrecht verlaufenden Ebene liegenden Querschnitt aufweist, dessen Durchmesser zwischen 40 Millimeter und 200 Millimeter beträgt.

8. Verpackungsverfahren gemäß Anspruch 7, demgemäß der Durchmesser der vorübergehenden Hülle kleiner als der Durchmesser der Aufbewahrungshülle ist. die dazu ausgelegt ist, den Fisch für dessen endgültige Verpackung aufzunehmen.

9. Verpackungsverfahren gemäß einem der Ansprüche 1 bis 8, demgemäß die im Schritt b) benutzte vorübergehende Hülle aus einem mindestens teilweise gasdichten Material wie etwa ein weiches Plastikmaterial, Aluminium oder Zellulose gefertigt ist.

10. Verpackungsverfahren gemäß einem der Ansprüche 3 bis 9, demgemäß außerdem die folgenden zusätzlichen Schritte durchgeführt werden:
- teilweises Auftauen der Stange Fisch;
- Zerschneiden der Stange in Scheiben in einer zu ihrer Längsachse quer verlaufenden Richtung, um eine Scheibe Fisch, vorzugsweise eine runde Scheibe Fisch, zu erhalten;
- Einführen der Scheibe Fisch, vorzugsweise bei -3 °C, in die Aufbewahrungshülle;
- Verschließen der Aufbewahrungshülle und Sterilisieren des so verpackten Fischs.

11. Verpackungsverfahren gemäß einem der Ansprüche 1 bis 10, demgemäß die Aufbewahrungshülle, die dazu ausgelegt ist, den Fisch für dessen endgültige Verpackung aufzunehmen, eine weiche Hülle oder eine steife Hülle vom Typ einer metallenen Konservenbüchse oder ein Gefäß aus Glas oder steifem Plastikmaterial ist.

## Claims

1. Method for packaging raw fish, comprising the following steps:
a) preparing raw fish including at least a step of cleaning said raw fish and a step of putting the raw fish in contact with an auxiliary composition comprising water and salt, said contacting step being performed after said cleaning step; and,
b) introducing the prepared raw fish obtained at step a) into a temporary cylindrical envelope of elongated shape, extending along a longitudinal axis, in such a way as to form a bar of prepared and wrapped raw fish, inside which the density of fish is between 0.9 kilogramme per litre and 1.15 kilogramme per litre; and,
e) performing the final packaging of the fish into a preservative envelope;
said temporary envelop being distinct from the preservative envelope.

2. Packaging method according to claim 1, wherein an additional step c) of cooking at least partially the bar of fish obtained at step b) is further performed.

3. Packaging method according to one of claims 1 and 2, wherein an additional step d) of freezing at least partially the bar of fish obtained at step b) is further performed.

4. Packaging method according to one of claims 1 to 3, wherein, at step a), the cleaning step includes heading, eviscerating, possibly washing the headed and eviscerated fish, and trimming the raw fish.

5. Packaging method according to one of claims 1 to 4, wherein step a) of preparing the raw fish includes a step of cutting the raw fish.

6. Packaging method according to one of claims 1 to 5, wherein the temporary envelope used at step b) extends along said longitudinal axis over a length between 50 centimetres and 5 metres.

7. Packaging method according to one of claims 1 to 6, wherein the temporary envelope used at step b) has a cross-section, in a plane perpendicular to said longitudinal axis, whose diameter is between 40 millimetres and 200 millimetres.

8. Packaging method according to claim 7, wherein said diameter of the temporary envelope is smaller than the diameter of the preservative envelope suitable to receive the fish for its final packaging.

9. Packaging method according to one of claims 1 to 8, wherein the temporary envelope used at step b) is made of an at least partially gas-tight material such as flexible plastic, aluminium or cellulose.

10. Packaging method according to one of claims 3 to 9, wherein the following additional steps are further performed:
- partially unfreezing the bar of fish;
- slicing the bar in a direction transverse to its longitudinal axis, in such a way as to obtain a slice of fish, preferably a disc of fish;
- inserting, preferably at -3°C, said slice of fish into said preservative envelope;
- closing the preservative envelope and sterilizing the so-packed fish.

11. Packaging method according to one of claims 1 to 10, wherein the preservative envelope for receiving the fish of the final packaging thereof is a flexible envelope or a rigid envelope such as a metal can or glass or rigid plastic jar.
